# EUROPEAN PATENT APPLICATION

(11) **EP 1 486 965 A2**
(43) Date of publication of application: **15.12.2004**
(21) Application number: 04253524.5
(22) Date of filing: 14.06.2004
(51) Int. Cl.: G11B 7/24

(54) **Optical information recording medium and method for manufacturing the same**

(30) Priority: 13.06.2003 JP 2003170050
(71) Applicant: MATSUSHITA ELECTRIC INDUSTRIAL CO., LTD., Kadoma-shi, Osaka 571-8501 (JP)
(72) Inventor: Uno, Mayumi, Izumi-shi Osaka 594-0041 (JP); Kojima, Rie, Kadoma-shi Osaka 571-0030 (JP); Yamada, Noboru, Hirakata-shi Osaka 573-1104 (JP)
(74) Representative: Davies, Christopher Robert

(57) **Abstract**

A recording layer (14) included in an optical information recording medium of the present invention includes: a mixture of a low oxide Te-O-M (M denotes at least one element selected from the group consisting of a metallic element, a metalloid element, and a semiconductor element) or a low oxide A-O (A denotes at least one element selected from the group consisting of Sb, Sn, In, Zn, Mo and W; and a material X (X denotes at least one compound selected from the group consisting of a fluoride, a carbide, a nitride and an oxide). Herein the low oxide refers to an oxide whose composition ratio of oxygen element is smaller than a composition ratio of oxygen element according to a stoichiometric composition.

## Description

The present invention relates generally to an optical information recording medium that allows information to be recorded and reproduced at a high density and a high speed through an optical means such as laser beam irradiation and a method for manufacturing the same.

Optical information recording media such as magneto-optic recording media and recording media of a phase-change type have been known as media that allow a large quantity of information to be recorded and reproduced at a high speed. In these optical information recording media, the change in optical characteristics of a recording material that is caused when the recording material is irradiated locally with a laser beam is used for recording marks. These optical information recording media have great advantages in that they permit random access as needed and have excellent portability. Hence, recently, their significance has been increasing more and more. The demand for them is increasing in various fields including the medical field, the academic field, etc. and for various purposes including, for example, recording and storing personal data or image information with computers and substituting for home video tapes. Nowadays, these optical information recording media have been required to achieve further increases in capacity, density, and speed due to the improvements in performance of applications and quality of image information.

The conventional optical information recording media include rewritable recording media in which information can be rewritten multiple times and write-once recording media in which information can be written only once. Generally, the write-once recording media often have a smaller number of layers than that included in the rewritable recording media. Accordingly, the write-once recording media can be manufactured easily at lower cost. In addition, they are convenient for writing data that a user wants to prevent from being destroyed since they are not rewritable. Furthermore, they have a long storage life and high reliability. Thus, they are expected to be in great demand for archival use. Hence, conceivably, the widespread use of high-density, rewritable recording media results in further increase in demand for high-density, write-once recording media.

Conventionally, various materials have been proposed for a recording material of the write-once recording media. For example, one proposal is to use a recording material in which Te particles are dispersed in an oxide base material, whereby a highly sensitive and large signal amplitude can be attained (See, for example, JP S58(1983)-054338 A). In addition, another proposal is to use a recording material containing Te-O-Pd (a material containing Te, O and Pd) as a main component, whereby a large signal amplitude and considerably high reliability can be attained (See, for example, T. Ohta, K. Kotera, K. Kimura, N. Akahira, and M. Takenaga, "New write-once media based on Te-TeO₂ for optical disks", Proceedings of SPIE, Vol. 695 (1986), pp. 2-9). The recording mechanism of Te-O-M, like Te-O-Pd, (M denotes an element including at least one of a metallic element, a metalloid element, and a semiconductor element) based recording materials can be considered as follows. The Te-O-M after the film formation is a composite material in which Te-M, Te and M are dispersed uniformly as fine particles in TeO₂. After the irradiation with a laser beam, Te, Te-M and M are molten and are deposited as larger crystalline particles, so that an optical state thereof is changed. This difference in the optical state can be detected as a signal. Furthermore, Te-O-M is a low oxide, and therefore has another advantage in that a film made of a material containing Te-O-M as a main component can be increased in transmittance easily, so that such a film can be applied to a multilayered optical information medium having multiple information layers (See, for instance, K. Nishiuchi, H. Kitaura, N. Yamada, and N. Akahira, "Dual-Layer Optical Disk with Te-O-Pd Phase-Change Film", Japanese Journal of Applied Physics, Vol. 37 (1998), pp. 2163-2167). Note here that, in this specification, the low oxide refers to an oxide whose composition ratio of oxygen element is smaller than a composition ratio of oxygen element according to a stoichiometric composition.

Currently, in order to achieve a higher density rewritable recording medium, an examination is made for using a laser beam in a wave range of shorter wavelengths such as bluish-purple wavelengths and for increasing a numerical aperture (NA) of an objective lens so as to perform the recording at a considerably high density.

In the above-described conventional recording media, however, while conditions for further enhancing a recording density in a recording film are provided such as a wavelength of the laser beam being in a bluish-purple wave range of shorter wavelengths and a NA of an objective lens being 0.80 or higher, the recording media have not been adapted to be made of a recording material that allows a higher signal quality to be attained.

That is to say, in the case where recording is attempted using the above-mentioned Te-O-M based recording materials under the significantly high density conditions as stated above that have not been adopted until now, it becomes difficult to obtain a high signal quality (a favorable C/N ratio and a favorable jitter value). This is because, when such a recording material is molten and is crystallized by irradiation with a laser beam, a peripheral portion of a recording mark is crystallized partially due to an influence of thermal diffusion in a recording film, thus causing an edge of the mark to be blurred.

A first optical information recording medium of the present invention includes a recording layer, and information is recorded and reproduced with respect to the optical information recording medium by irradiating the recording layer with a laser beam. The recording layer includes a mixture of a low oxide Te-O-M and a material X, wherein M denotes at least one element selected from the group consisting of a metallic element, a metalloid element, and a semiconductor element, and X denotes at least one compound selected from the group consisting of a fluoride, a carbide, a nitride and an oxide (except for Te oxide). As stated previously, the low oxide in this context refers to an oxide whose composition ratio of oxygen element is smaller than a composition ratio of oxygen element according to stoichiometric composition.

A second optical information recording medium of the present invention includes a recording layer, and information is recorded and reproduced with respect to the optical information recording medium by irradiating the recording layer with a laser beam. The recording layer includes a mixture of a low oxide A-O and a material X, wherein A denotes at least one element selected from the group consisting of Sb, Sn, In, Zn, Mo and W, and X denotes at least one compound selected from the group consisting of a fluoride, a carbide, a nitride and an oxide. The low oxide referred to herein is the same as above.

A first method for manufacturing an optical information recording medium of the present invention is for manufacturing an optical information recording medium including a recording layer, wherein information is recorded and reproduced with respect to the optical information recording medium by irradiating the recording layer with a laser beam. The method includes the step of: manufacturing the recording layer by sputtering using a target material containing Te-M and a material X, wherein M denotes at least one element selected from the group consisting of a metallic element, a metalloid element, and a semiconductor element, and X denotes at least one compound selected from the group consisting of a fluoride, a carbide, a nitride and an oxide (except for Te oxide) .

A second method for manufacturing an optical information recording medium of the present invention is manufacturing an optical information recording medium including a recording layer, wherein information is recorded and reproduced with respect to the optical information recording medium by irradiating the recording layer with a laser beam. The method includes the step of: manufacturing the recording layer by sputtering using a target material containing an element A and a material X, wherein A denotes at least one element selected from the group consisting of Sb, Sn, In, Zn, Mo and W, and X denotes at least one compound selected from the group consisting of a fluoride, a carbide, a nitride and an oxide.

Fig. 1 is a cross-sectional view of an optical information recording medium according Embodiment 1 of the present invention.

Fig. 2 is a cross-sectional view of an optical information recording medium according Embodiment 2 of the present invention.

Fig. 3 is a drawing for explaining one example of an apparatus that records and reproduces signals with respect to the optical information recording media according to Embodiment 1 and Embodiment 2 of the present invention.

Fig. 4 is a cross-sectional view showing another example of an optical information recording medium according Embodiment 2 of the present invention.

The first and the second optical information recording media of the present invention allow thermal conductivity of the recording layers to be kept sufficiently low, thus enabling the suppression of thermal diffusion in the recording film surface when a signal is written with a laser beam. Thereby, a write-once medium can be provided so as to allow a high signal quality to be obtained even when still higher-density recording is conducted.

In the first and the second optical information recording media of the present invention, preferably, a content of the material X in the mixture is 30 mol% or less. This allows a larger signal amplitude to be attained easily.

In the first optical information recording medium of the present invention, preferably, assuming that an atomic density of M in the Te-O-M is represented as x (atomic%) and an atomic density of Te is represented as y (atomic%), x and y satisfy a relationship of 0.05y ≤ x ≤ y. This allows a larger signal amplitude to be attained.

In the first and the second optical information recording media of the present invention, preferably, the material X includes at least one selected from the group consisting of La-F, Mg-F, Ca-F, fluorides of rare earth elements, Si-O, Cr-O, Ge-O, Hf-O, Mo-O, Ti-O, W-O, Zn-O and Zr-O. This allows thermal conductivity of the recording layer to be decreased easily and jitter reduction effects to be obtained easily.

In the first optical information recording medium of the present invention, preferably, M is at least one element selected from the group consisting of Pd, Au, Pt, Ag, Cu, Sb, Bi, Ge, and Sn. This allows a recording material having a high crystallization rate to be obtained easily, thus allowing an optical information recording medium suitable for recording at a high linear velocity to be realized easily.

In the first optical information recording medium of the present invention, the recording layer may include a first film containing at least the Te-O-M and a second film containing at least the material X. This allows a mixture ratio of the material X to be changed easily.

In the first and the second optical information recording media of the present invention, a plurality of information layers may be provided. In this case, at least one of the plurality of information layers may include the above recording layer. This allows a larger capacity of multilayered optical information medium to be attained.

In the first and the second optical information recording media of the present invention, preferably, a thickness of the recording layer is 20 nm or less. Since this facilitates the suppression of thermal diffusion in the film surface of the recording layer, the thermal conductivity reduction effects of the present invention can be obtained more effectively. Note here that although the lower limit of the thickness of the recording layer is not limited especially, a preferable thickness is 3 nm or more for facilitating the formation of the recording layer in a layer form.

According to the first and the second optical information recording medium manufacturing methods of the present invention, an optical information recording medium can be manufactured so as to allow a high signal quality to be obtained even when still higher-density recording is conducted.

In the first optical information recording medium manufacturing method of the present invention, preferably, the target material includes a mixture of Te-M and the material X. Furthermore, the target material may include a target material A containing Te-M and a target material B containing the material X, and the recording layer may be manufactured by sputtering concurrently using the target material A and the target material B. Furthermore, in the case where the recording layer is formed with a first film containing Te-O-M at least and a second film containing the material X at least, a low oxide Te-O-M film (the first film) may be manufactured by sputtering using the target material A, and a film containing the material X (the second film) may be manufactured by sputtering using the target material B.

In the second optical information recording medium manufacturing method of the present invention, preferably, the target material includes a mixture of the element A and the material X. Furthermore, the target material may include a target material C containing A and a target material B containing the material X, and the recording layer may be manufactured by sputtering concurrently using the target material C and the target material B.

In the first and the second optical information recording medium manufacturing methods of the present invention, in the step of manufacturing the recording layer, the recording layer may be manufactured by reactive sputtering using a film formation gas including a mixture gas of a rare gas and an oxygen gas. This allows a favorable film quality of the manufactured recording layer to be kept easily.

The following describes embodiments of the present invention, with reference to the drawings.

### Embodiment 1

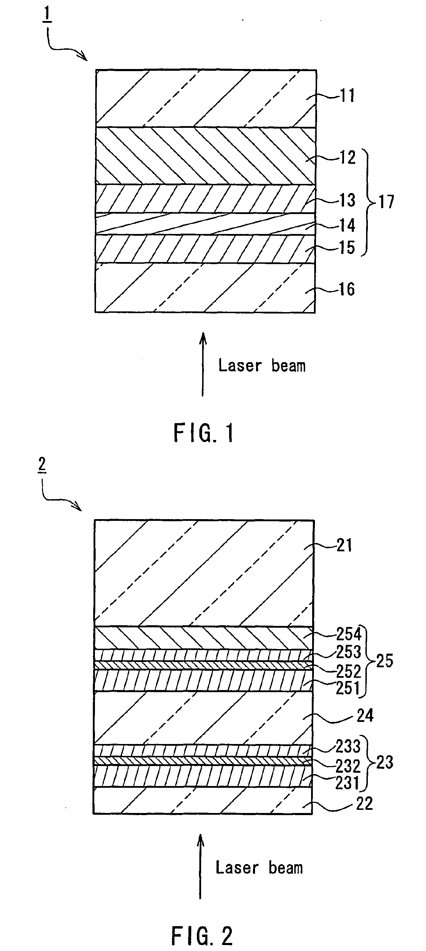

Fig. 1 is a cross-sectional view showing one embodiment of an optical information recording medium of the present invention. As shown in Fig. 1, the optical information recording medium 1 of this embodiment includes a substrate 11 and a reflective layer 12, a protective layer 13, a recording layer 14, a protective layer 15 and an optically transparent layer 16 that are laminated in this order on the substrate 11. In the optical information recording medium 1, the optically transparent layer 16 is on a laser beam incident side.

The substrate 11 and the optically transparent layer 16 are protective members that play a role for protecting the optical information recording medium 1 from scratches and oxidation. Since the optically transparent layer 16 is required to allow a laser beam to reach the recording layer 14 so as to carry out recording/reproducing, a material is used that is optically transparent with respect to the laser beam or that has a negligible level of optical absorptance (for instance, 10% or less) even if the material absorbs light. Examples of the materials of the optically transparent layer 16 include various resins such as polycarbonate, polymethyl methacrylate, and polyolefin resins, and glass. Note here that this embodiment shows a configuration where the laser beam is incident from the optically transparent layer 16 side. However, the laser beam may be incident from the substrate 11 side. In this case, the substrate 11 has to be formed of a material that is optically transparent with respect to the laser beam. Furthermore, the reflective layer 12, the protective layer 13, the recording layer 14 and the protective layer 15 are laminated in the reversed order of Fig. 1.

As the optically transparent layer 16, a substrate produced in a predetermined form by, for instance, molding, or one formed from a sheet-like material to have a predetermined form may be used. In addition, an ultraviolet curable resin that is optically transparent with respect to the laser beam used for recording and reproduction may be used for the optically transparent layer 16, as long as a film thickness thereof is uniform within a predetermined film thickness range. In this context, the optically transparent layer 16 denotes all transparent layers that are provided on the laser incident side with respect to the protective layer 15 described later. For instance, when a transparent sheet is bonded using a transparent ultraviolet curable resin, the whole is referred to as the optically transparent layer 16.

A protective coat further may be provided between the protective layer 15 and the optically transparent layer 16. The following is a brief description concerning steps for producing the protective coat between the protective layer 15 and the optically transparent layer 16. For instance, as shown in Fig. 1, after a multilayer film (information layer 17) including the reflective layer 12 through the protective layer 15 is formed on the substrate 11, the substrate 11 with the information layer 17 formed thereon is taken out of a sputtering device. Subsequently, an ultraviolet curable resin is applied to the surface of the protective layer 15 as the protective coat by, for instance, spin coating. This then is irradiated with ultraviolet rays from the side of the surface to which the ultraviolet curable resin has been applied and thereby this resin is cured. Thus, the protective coat is formed and thereby the steps of forming the protective coat are completed. The ultraviolet irradiation carried out in this step may be performed using any one of a DC lamp and a flash lamp.

Preferably, guide grooves or pits for guiding the laser beam are formed in a surface of at least one of the optically transparent layer 16 and the substrate 11 on its side on which the recording layer 14 is provided.

The protective layer 13 and the protective layer 15 are provided mainly for the purpose of protecting the recording material and for regulating optical properties, for example, so as to enable the effective optical absorption in the recording layer 14. Examples of the materials to be used for the protective layers 13 and15 include sulfides such as ZnS, selenides such as ZnSe, oxides such as Si-O, Al-O, Ti-O, Ta-O, Zr-O and Cr-O, nitrides such as Ge-N, Cr-N, Si-N, Al-N, Nb-N, Mo-N, Ti-N, Zr-N and Ta-N, oxynitrides such as Ge-O-N, Cr-O-N, Si-O-N, Al-O-N, Nb-O-N, Mo-O-N, Ti-O-N, Zr-O-N and Ta-O-N, carbides such as Ge-C, Cr-C, Si-C, Al-C, Ti-C, Zr-C, and Ta-C, fluorides such as Si-F, Al-F, Mg-F, Ca-F, and La-F, other dielectric materials, and suitable combinations thereof (for example, ZnS-SiO₂.

The reflective layer 12 may be formed of metal such as Au, Ag, Cu, Al, Ni, Cr, or Ti, or an alloy of metals selected suitably. The reflective layer 12 is provided to obtain a heat dissipation effect and optical effects such as effective optical absorption in the recording layer 14. Preferably, the reflective layer 12 has a thickness of at least 1 nm. This is because the thickness of the reflective layer 12 of at least 1 nm enables the film in a uniform layer, thus suppressing a deterioration of thermal and optical effects. Although the upper limit of the thickness the reflective layer 12 is not limited especially, the reflective layer 12 preferably has a thickness of 200 nm or less. This allows a favorable recording sensitivity to be obtained.

The recording layer 14 may be formed of a material containing a mixture of a low oxide Te-O-M and a material X as a main component. Herein, M denotes the same element as described above, and the material X denotes a material containing at least one of a fluoride, a carbide, a nitride and an oxide (except for Te oxide). Note here that in this specification a main component is a component occupying 90 mol% or more. Since the recording layer 14 of this embodiment allows thermal conductivity of the recording layer 14 to be kept sufficiently low, the thermal diffusion in the recording film surface can be suppressed during the writing of a signal with a laser beam. Thereby, even under the high density recording conditions in which a short-wavelength laser beam, for example, a bluish-purple laser beam is used and a large NA is adopted, a high signal quality can be obtained and a recording medium that allows only-once writing and has excellent long-term storage characteristics can be realized.

Te-O-M immediately after the film formation is a composite material in which Te, Te-M and M are dispersed uniformly as fine particles in TeO₂. After the irradiation with a laser beam, Te and Te-M increase in diameter of crystalline particles. A change in the optical state during this can be detected as a signal, and therefore a so-called write-once recording medium that allows only-once writing can be realized.

The element M is added for promoting the crystallization of Te, and any element capable of combining with Te can produce this effect. Crystals of Te have a structure in which chain-form structures, each including Te atoms connected in a spiral fashion by covalent bonding, combine with each other by a weak van der Waals force. Since to melt Te requires only the cutting of this weak van der Waals force, Te has a relatively low melting point at about 452°C. However, the structure of atoms connected in a spiral fashion remains at this time, and therefore the crystallization rate of Te is low. According to the recording material of this embodiment, since the element M capable of forming a combination with Te is added, the element M and Te form cross-links and the above-described chain-form structures hardly occurs, thus allowing an increase in crystallization rate.

Specific examples of the element M include at least one element selected from Pd, Au, Pt, Ag, Cu, Sb, Bi, Ge, Sn, In, Ti, Zr, Hf, Cr, Mo, W, Co, Ni and Zn and may include a plurality of elements. Particularly, in the case where the element M includes at least one selected from Pd, Au, Pt, Ag, Cu, Sb, Bi, Ge, Sn and In, the cross-links with Te atoms can be formed more effectively, thus allowing a higher crystallization rate to be attained easily. Among them, the use of noble metals such as Au and Pd allows a high crystallization rate to be attained particularly easily.

Preferably, the element M is added in Te-O-M in such a manner that, assuming that x atom% represents the content of the element M and y atom% represents the content of Te, x and y satisfy the relationship of 0.05y ≤ x ≤ y. The relationship of x ≤ y allows a sufficient variation in optical properties to be attained and the relationship of 0.05y ≤ x allows the effect of enhancing the crystallization rate to be attained effectively.

The material X is added mainly for reducing the thermal conductivity of the recording layer 14, and may be a material including at least one of a fluoride, a carbide, a nitride and an oxide except for Te oxide. As described previously, although the write-once recording material Te-O-M immediately after the film formation is a composite material in which fine particles of Te, Te-M and M are dispersed uniformly in TeO₂, it was found from the experiments by the inventors of the present invention that the addition of the material X thereto allows a decrease in thermal conductivity of the recording layer 14 immediately after the film formation. The reasons for this can be estimated as follows: immediately after the film formation, both of the TeO₂ and the material X serve as a dispersion medium and therefore the dispersion medium is allowed to have a more complicated structure, which facilitates the occurrence of phonon scattering.

Particularly preferably, the material X includes at least one selected from La-F, Mg-F, Ca-F, fluorides of rare earth elements, Si-O, Cr-O, Ge-O, Hf-O, Mo-O, Ti-O, W-O, Zn-O and Zr-O. These materials have relatively low thermal conductivity, thus allowing thermal conductivity of the recording layer to be decreased effectively when they are added in the recording layer.

In the mixture of Te-O-M and the material X, it is preferable that the content of the material X is 30 mol% or less. This is because if the content of the material X in the mixture exceeds 30 mol%, a variation in optical properties between before and after the recording is decreased slightly.

A preferable thickness of the recording layer 14 ranges from 3 nm to 20 nm, inclusive. This is because, the film thickness of 3 nm or more facilitates the formation of a recording material in a layer form, which allows a favorable signal to be attained. In addition, the film thickness of 20 nm or less allows thermal diffusion in the recording layer to be suppressed, thus allowing the effect of suppressing the thermal diffusion, which is by virtue of the addition of the material X, to be attained more effectively.

Furthermore, the recording layer 14 may be configured with: a first film containing Te-O-M as a main component; and a second film containing the material X as a main component. In this case, although the number of steps is increased for producing two layers, the mixture ratio of Te-O-M and the material X can be adjusted easily by making fine adjustments of the respective film thicknesses, and therefore it is preferable that this configuration is adopted suitably in some cases.

As the material of the recording layer 14, a low oxide other than Te-O based one may be used. For instance, when a material containing a low oxide of Sb-O, Sn-O, In-O, Zn-O, Mo-O or W-O undergoes irradiation with a laser beam, these materials undergo an irreversible change similar to Te-O based materials. Although the recording mechanism of the respective materials has not been made completely clear, it is conceived that, with respect to Sb-O, In-O and Sn-O, the laser beam irradiation causes crystal particles to increase in size in the same manner as in Te-O. For these materials also, the effect of reducing thermal conductivity can be obtained similarly to the Te-O based materials by adding the material X. Thus, even under still higher-density conditions for the recording, a high signal quality can be obtained.

Note here that the present invention is not limited to the optical information recording medium 1 shown in Fig. 1, and can be applied to various configurations. For instance, a configuration without the reflective layer 12 and a configuration without the protective layer 13 or the protective layer 15 are possible as needed.

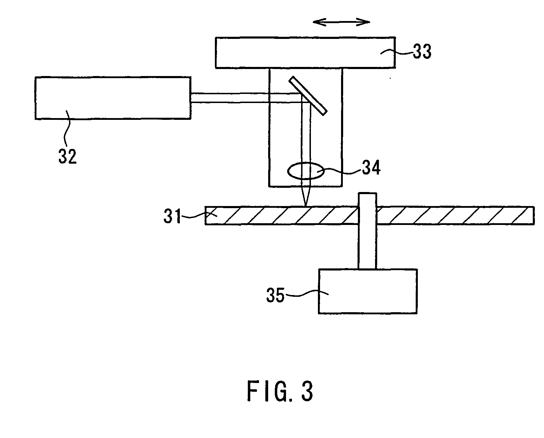

The following describes one example of a recording/reproducing method of the optical information recording medium 1. Fig. 3 schematically shows one example of an apparatus, which is used for recording, reproducing and erasing information with respect to the optical information recording medium 1 as an optical disk 31. This apparatus includes: a laser beam source 32; an optical head with an objective lens 34 mounted therein; a driving device 33 for guiding a laser beam to illuminate a predetermined location; a tracking control device and a focusing control device (not illustrated) for controlling a position in a track direction and a position in a direction perpendicular to the film surface; a laser driving device (not illustrated) for modulating a laser power; and a rotation control device 35 for rotating the optical disk 31.

The recording, reproducing and erasing of information start with the rotation of the optical disk 31 by the rotation control device 35. Then, a laser beam is narrowed into a microspot by the optical system (objective lens 34) and a predetermined region of the optical disk 31 is irradiated with the laser beam. When reproducing information, a laser beam is applied whose power is lower than a power level for recording or erasing information, but can yield a sufficient light amount for reproducing of the recording mark from the optical disk 31 by the irradiation with the laser beam without affecting optical conditions of the recording mark, and a signal obtained is read out by a detector.

### Embodiment 2

Fig. 2 is a cross-sectional view showing another embodiment of the optical information recording medium of the present invention. The optical information recording medium 2 of this embodiment is a multilayered optical information recording medium in which a first information layer 23 and a second information layer 25 are laminated in this order from a laser beam incident side with an intermediate layer 24 interposed therebetween. Note here that reference numeral 21 denotes a substrate and 22 denotes an optically transparent layer. The first information layer 23 includes a protective layer 231, a recording layer 232 and a protective layer 233 that are laminated in this order from the laser beam incident side. The second information layer 25 includes a protective layer 251, a recording layer 252, a protective layer 253 and a reflective layer 254 that are laminated in this order from the laser beam incident side.

The optical information recording medium 2 of this embodiment has a configuration that allows recording and reproducing to be conducted with respect to both of the first information layer 23 and the second information layer 25 by the laser beam incident from one direction. Therefore, the first information layer 23 is required to have optical transmittance properties. This is because the recording/reproducing of information with respect to the second information layer 25 is conducted with light passing through the first information layer 23, and it is preferable to have a design allowing an increase in recording sensitivity.

Furthermore, it is preferable that the variation in transmittance of the first information layer 23 that is caused between before and after the signals are recorded is small. For instance, 10% or less of variation in transmittance is preferable. By setting the variation in transmittance in this way, the amplitude of reproduction signals from the second information layer 25 can be obtained stably irrespective of the first information layer 23 being recorded or not, and therefore stable tracking can be attained. In this embodiment, by adjusting a composition ratio of the material M of the recording material or a composition ratio of the material X, this variation in transmittance can be suppressed to the minimum.

The recording layers 232 and 252 included in the first information layer 23 and the second information layer 25 may be formed of the same materials as the recording layer 14 of the optical information recording medium 1 described in Embodiment 1, and are formed to have similar functions. Furthermore, film thicknesses of the recording layers 232 and 252 (particularly, the recording layer 232 included in the first information layer 23) preferably range from 3 nm to 20 nm, inclusive. In addition to the reasons described for the recording layer 14 of the optical information recording medium 1 in Embodiment 1, another reason for this is that the recording layer of 20 nm or less allows a sufficiently high transmittance to be obtained, which is especially preferable in the case of multiple information layers to be laminated.

Furthermore, the protective layers 231, 233, 251 and 253 may be formed of the same materials as the protective layers 13 and 15 of the optical information recording medium 1 described in Embodiment 1, and are formed to have similar functions. Furthermore, the reflective layer 254 may be formed of the same materials as the reflective layer 12 of the optical information recording medium 1 described in Embodiment 1, and is formed to have similar functions.

The intermediate layer 24 is provided for optically separating the first information layer 23 and the second information layer 25, and may be made of a material such as an ultraviolet curable resin that is optically transparent with respect to a laser beam. The intermediate layer 24 may be thick enough to enable the separation between the respective information layers and be within a range enabling the focusing on the two information layers by an objective lens.

Although this embodiment shows the configuration in which the first information layer 23 does not have a reflective layer, various configurations such as the first information layer 23 having a reflective layer, two protective layers 233 being provided and the like are possible. In this way, the present invention can be applied to other various configurations.

Furthermore, information can be recorded/reproduced with respect to the optical information recording medium 2 as well, in the same manner as in the optical information recording medium 1 of Embodiment 1.

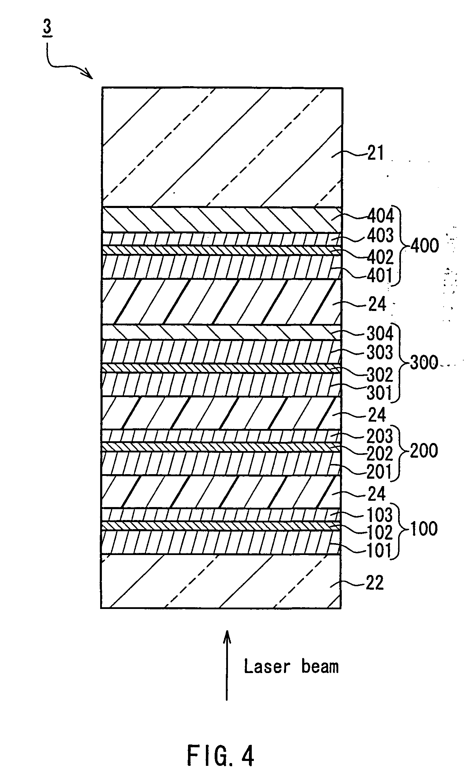

That is the description concerning the optical information recording medium including two or more information layers. However, the present invention is not limited to this, and the information layers may be laminated as m-layers (m represents integers of 2 or more). In such a case, a rewritable information layer and an information layer exclusively used for reproduction may be used as at least one of the plurality of information layers. This configuration allows information recorded only once that a user does not wish to erase, information that a user wishes to rewrite, and information exclusively used for reproduction to coexist in one medium. Therefore, an optical information recording medium that is very convenient and is applicable to various applications can be provided. The following describes an example of the optical information recording medium provided with four information layers, with reference to Fig. 4.

Fig. 4 is a cross-sectional view of an optical information recording medium 3 in which four information layers are laminated. This optical information recording medium 3 includes a first information layer 100, a second information layer 200, a third information layer 300 and a fourth information layer 400 that are provided between a substrate 21 and an optically transparent layer 22 in this order from a laser beam incident side. Between the respective information layers, an intermediate layer 24 is disposed. In the configuration example shown in Fig. 4, the first information layer 100 and the second information layer 200 respectively include protective layers 101 and 201, recording layers 102 and 202 and protective layers 103 and 203, which are arranged in this order from a laser beam incident side. The third information layer 300 and the fourth information layer 400 respectively include protective layers 301 and 401, recording layers 302 and 402, protective layers 303 and 403 and reflective layers 304 and 404, which are arranged in this order from the laser beam incident side.

At least one of the recording layers 102, 202, 302 and 402 may be formed of the same materials as the recording layer 14 of the optical information recording medium 1 described in Embodiment 1, and is formed to have similar functions. Furthermore, film thicknesses and the like of these respective information layers preferably have a range similar to those of the recording layer 14.

The protective layers 101, 103, 201, 203, 301, 303, 401 and 403 may be formed of the same materials as the protective layers 13 and 15 of the optical information recording medium 1 described in Embodiment 1, and are formed to have similar functions. Furthermore, the reflective layers 304 and 404 may be formed of the same materials as the protective layer 12 of the optical information recording medium 1 described in Embodiment 1, and are formed to have similar functions.

In this configuration example also, irradiation with a laser beam from one direction allows recording and reproducing with respect to the first through the fourth information layers 100, 200, 300 and 400. Therefore, at least the first information layer 100 that is disposed the closest to the laser beam incident face is required to have optical transmittance properties. On the other hand, the fourth information layer 400 that is disposed the farthest from the laser beam incident face preferably is designed to have an increased recording sensitivity so as to allow the recording with light passing through the first through the third information layers 100, 200 and 300.

### Embodiment 3

The following describes one embodiment of a method of manufacturing the optical information recording media of the present invention. The available methods of producing a multilayer film constituting the optical information recording media 1 to 3 described in Embodiments 1 and 2 include a sputtering method, a vacuum deposition method, and a CVD method. Gas that is used for forming the film (hereinafter referred to as a "film forming gas") may be any gas that allows the film to be formed, for example, a rare gas such as Ar and Kr. For instance, as an example of a sputtering method used, reactive sputtering may be conducted using a gas containing a trace amount of, for instance, oxygen or nitrogen mixed with a rare gas as required.

When manufacturing the recording layers of the optical information recording media 1 to 3, reactive sputtering preferably is conducted, where a gas containing a mixture gas of a rare gas and oxygen as a main component is adopted as the film forming gas. Thereby, a recording layer with favorable film quality can be manufactured easily. In this step, the composition ratio of oxygen contained in the-recording layer is varied through the change in flow ratio of the rare gas and oxygen, and thereby the flow rate conditions of the respective gases may be determined to allow favorable characteristics to be obtained.

Furthermore, when manufacturing the recording layers by sputtering, a target material containing as a main component a mixture of Te-M (M is the same element as above) and the material X (X denotes at least one compound selected from a fluoride, a carbide, a nitride and an oxide (except for Te oxide)) preferably is used. This requires only one target to be used during the recording layer manufacturing step, thus facilitating the formation of the recording layers.

Alternatively, when manufacturing the recording layers by sputtering, a target material A containing Te-M and a target material B containing the material X may be used separately, and sputtering may be conducted concurrently using these different target materials. In this case, although two target materials are to be used, the mixture ratio of the material X can be adjusted easily and suitably by changing sputtering powers for the respective target materials. Therefore, when the mixture ratio of the material X is to be varied among the multiple information layers or when the mixture ratio of the material X is to be varied in a depth direction even in the case of a signal recording layer, for example, this method preferably is adopted.

Furthermore, in the case where the recording layer is configured with two films including: a film containing at least Te-O-M; and a film containing at least the material X, the respective films are manufactured separately. In this case, although two film formation steps are required for the recording layer manufacturing step, the mixture ratio of the material X relative to the recording layer as the whole can be changed easily by changing the respective film thicknesses. Therefore, it is preferable to adopt this configuration as needed.

Also in the case where the recording layers are formed of a material containing a low oxide of Sb-O, Sn-O, In-O, Zn-O, Mo-O or W-O and the material X, the sputtering method similarly can be used, and reactive sputtering also can be used.

### [Working Examples]

The following describes the present invention more specifically, referring to Working Examples. Note here that the following Working Examples do not limit the present invention.

### [Example 1]

As the optical information recording medium of this example, the optical information recording medium 1 shown in Fig. 1 was manufactured. As the substrate 11, a disc-like polycarbonate plate was used. The disc-like polycarbonate plate had a thickness of 1.1 mm and a diameter of 120 mm. It had a spiral groove formed on a surface. The spiral groove had a width of 0.25 µm, a pitch of 0.32 µm, and a depth of 20 nm. The protective layers 13 and 15 both were formed using a material in which 20 mol% of SiO₂ was mixed with ZnS. The reflective layer 12 was formed using Al-Cr. For the recording layer 14, a mixture of Te-O-Pd and LaF₃ was used and the composition ratio thereof was varied. The film thicknesses of the protective layers 13 and 15 were 6 nm and 17 nm, respectively, the film thickness of the reflective layer 12 was 40 nm and the film thickness of the recording layer 14 was 20 nm. The film formation was conducted sequentially from the reflective layer 12 to the protective layer 15 on the substrate 11. The optically transparent layer 16 was formed by attaching a sheet with a thickness of 90 µm made of a polycarbonate resin using an ultraviolet curable resin.

The film formation of the protective layers 13 and 15 was performed by supplying an Ar gas so as to attain 0.13 Pa as the overall pressure, where a radio frequency (RF) power source was used as a cathode with a power of 5.10 W/cm² injected. The film formation of the reflective layer 12 was performed by supplying an Ar gas so as to attain 0.13 Pa as the overall pressure, where a direct current (DC) power source was used with a power of 4.45 W/cm² injected. The film formation of the recording layer 14 was performed by supplying a mixture gas of Ar and oxygen so as to attain 0.13 Pa as the overall pressure, where a DC power source was used as a cathode with a power of 1.27 W/cm² injected. For the formation of the recording layer 14, a mixture of Te-Pd and LaF₃ was used as a target. The recording layer 14 was formed so as to attain a desired oxygen composition ratio in the film by adjusting a flow ratio of an Ar gas and an oxygen gas. More specifically, the flow rate of the Ar gas was set at 4.17 × 10⁻⁷ m³/s (25 sccm) and the flow rate of the oxygen gas was set at 3.67 × 10⁻⁷ m³/s (22 sccm).

A laser beam with a wavelength of 405 nm and an objective lens with a numerical aperture of 0.85 were used for recording and reproducing information. The signal modulation was carried out by 1-7PP modulation. The length of a 2T mark was 0.160 µm, and the disk rotational speed was a linear velocity of 5.28 m/s. The characteristics of the disk were evaluated as follows. That is, single signals of the 2T mark were recorded in the groove region with a suitable laser power and then the C/N ratio of signals obtained was measured. In this connection, the groove region is defined as tracks that are located closer to the laser beam incident side of tracks formed of convexities and concavities in the substrate 11.

As for the composition of the recording layer 14 of the manufactured media, the composition ratio of Te-O-Pd was fixed at Te₃₆O₅₄Pd₁₀, and the amount of LaF₃ was changed as 5 mol%, 10 mol%, 30 mol%, 40 mol% and 50 mol% relative to the overall amount. These media will be referred to as medium (1) through medium (5), respectively. Medium (0) as a comparative example had the same configuration as that of medium (1) to medium (5) except that the composition of Te₃₆O₅₄Pd₁₀ that did not contain LaF₃ was used for the recording layer 14. Table 1 shows the evaluation results of media (0) to (5).

**(Table 1)**

| Medium No. | Composition of recording layer 14 (mol%) | C/N ratio |
|---|---|---|
| (1) | (Te₃₆O₅₄Pd₁₀)₉₅(LaF₃)₅ | ○ |
| (2) | (Te₃₆O₅₄Pd₁₀)₉₀(LaF₃)₁₀ | ○ |
| (3) | (Te₃₆O₅₄Pd₁₀)₇₀(LaF₃)₃₀ | ○ |
| (4) | (Te₃₆O₅₄Pd₁₀)₆₀(LaF₃)₄₀ | Δ |
| (5) | (Te₃₆O₅₄Pd₁₀)₅₀(LaF₃)₅₀ | Δ |
| (0) | Te₃₆O₅₄Pd₁₀ | × |

With respect to the C/N ratio mentioned in Table 1, "○" denotes at least 50 dB, "Δ" denotes less than 50 dB and 45 dB or more, and "×" denotes less than 45 dB.

According to Table 1, the C/N ratio of the 2T mark obtained in media (1) to (5) was improved as compared to that in the medium (0) as the comparative example. The reason for this can be considered as follows: since media (1) to (5) contain LaF₃ in the recording layers 14, thermal conductivity of the recording films was decreased, thus suppressing thermal diffusion in the recording films and allowing the formation of a mark having a clear border with a non-recorded portion. In the case of media (4) and (5) whose content of LaF₃ is more than 30 mol%, a slight decrease in C/N ratio could be observed. It can be considered that this resulted from a ratio of Te-O as a base material that caused phase-change became relatively small. When 2T to 9T random signals were recorded on media (1) to (3) whose C/N ratios were favorite and their jitter values were measured, favorable values of 6.5% or less could be obtained from all of them, which satisfied specification values. From this point, the content of LaF₃ added preferably is set at 30 mol% or less.

When media were manufactured in a similar manner by using a material for the recording layer 14 in which LaF₃ was substituted with Mg-F, Ca-F, Li-F and Y-F, respectively, C/N ratio enhancement effects similar to Table 1 could be obtained for these media as well.

Furthermore, similarly, also when Si-C, Al-C, Si-N, Cr-N, Ti-N, Mo-N, W-N, Ge-N, Si-O, Cr-O, Sb-O, Ge-O, In-O, Sn-O, Mn-O and W-O were used instead of LaF₃, the similar C/N ratio enhancement effects could be obtained.

Furthermore, media were manufactured so as to have the same configuration as that of medium (2), except that the content of LaF₃ was made constant at 10 mol%, and the composition ratio of Te-O-Pd was changed as Te₄₀O₅₉Pd₁, Te₄₀O₅₈Pd₂, Te₄₀O₅₆Pd₄, Te₃₄O₅₆Pd₁₀, Te₃₀O₅₅Pd₁₅, Te₂₈O₅₂Pd₂₀, Te₂₅O₅₂Pd₂₃, Te₂₅O₅₀Pd₂₅, Te₂₅O₄₈Pd₂₇ and Te₂₄O₄₆Pd₃₀. These media will be referred to as media (6) to (15). Table 2 shows evaluation results of media (6) to (15), the evaluation being conducted in a similar manner to media (1) to (5).

**(Table 2)**

| Medium No. | Composition of recording layer 14 (mol%) (Te_{y}O_{100-x-y}Pdₓ)₉₀(LaF₃)₁₀ | X | C/N ratio |
|---|---|---|---|
| (6) | (Te₄₀O₅₉Pd₁)₉₀(LaF₃)₁₀ | 0.025y | Δ |
| (7) | (Te₄₀O₅₈Pd₂)₉₀(LaF₃)₁₀ | 0.05y | ○ |
| (8) | (Te₄₀O₅₆Pd₄)₉₀(LaF₃)₁₀ | 0.1y | ○ |
| (9) | (Te₃₄O₅₆Pd₁₀)₉₀(LaF₃)₁₀ | 0.3y | ○ |
| (10) | (Te₃₀ O₅₅ Pd₁₅)₉₀(LaF₃)₁₀ | 0.5y | ○ |
| (11) | (Te₂₈O₅₂Pd₂₀)₉₀(LaF₃)₁₀ | 0.7y | ○ |
| (12) | (Te₂₅O₅₂Pd₂₃)₉₀(LaF₃)₁₀ | 0.9y | ○ |
| (13) | (Te₂₅O₅₀Pd₂₅)₉₀(LaF₃)₁₀ | Y | ○ |
| (14) | (Te₂₅O₄₈Pd₂₇)₉₀(LaF₃)₁₀ | 1.1y | Δ |
| (15) | (Te₂₄O₄₆Pd₃₀)₉₀(LaF₃)₁₀ | 1.3y | Δ |

According to Table 2, the C/N ratio of the 2T mark obtained in media (6) to (15) also was improved as compared to that in the medium (0) as the comparative example. Media (14) and (15) had slightly decreased C/N ratio enhancement effects as compared with medium (0) as the comparative example. It can be considered that this resulted from the content of Pd being larger than the content of Te, which means that the ratio of Te-O was slightly decreased similarly to medium (5), thus causing a decrease in signal amplitude. In addition, medium (6) had a slightly low crystallization rate and the C/N ratio obtained with a laser power within an output range was 46 dB. On the contrary, for media (7) to (13) whose x was within a range of 0.05y to y, favorable C/N ratios of 50 dB or higher could be attained. Furthermore, when 2T to 9T random signals were recorded on these media (7) to (13) and their jitter values were measured, favorable values of 6.5% or less could be obtained from all of them, which satisfied specification values. From this point, it was also confirmed that the content x of Pd to be added preferably has a relationship of 0.05y ≤ x ≤ y with respect to the content y of Te.

The use of Au, Pt, Ag, Cu, Sb, Bi, Ge and Sn as the element M instead of Pd also could achieve the results similar to Table 2. In the case of these materials used also, excellent C/N ratio enhancement effects could be attained by setting the mixture ratio of the material M so as not-to exceed the content of Te.

From the above, it was confirmed that by making a main component of the recording layer 14 a mixture of Te-O-M (M denotes the same elements as stated above) and the material X (X denotes at least one compound selected from a fluoride, a carbide, a nitride and an oxide (except for Te oxide)), thermal diffusion in the recording film surface could be suppressed, and even in the case of recording conducted at significantly high density conditions, a large C/N ratio could be attained.

### [Example 2]

As the optical information recording medium of this example, the optical information recording medium 2 shown in Fig. 2 was manufactured. The substrate 11 used was the same as Example 1, and the protective layers 231, 233, 251 and 253 were all formed using a material in which 20 mol% of SiO₂ was mixed with ZnS. The reflective layer 254 was formed using Al-Cr. Te-O-Pd was used for the recording layer 232, and a mixture of Te-O-Pd and SiO₂ having the composition described later was used for the recording layer 252. As for the film thicknesses of the respective layers, a range of the condition that allows values of reflectance and signal amplitude from the two information layers to be equal to each other was derived from optical design, and the thicknesses were determined from this range so as to obtain sufficient transmittance of the first information layer 23 and a high recording sensitivity of the second information layer 25. More specifically, the film thicknesses of the protective layers 231, 233, 251 and 253 were set at 33 nm, 17 nm, 9 nm and 17 nm, respectively, and the film thickness of the reflective layer 254 was 40 nm and the film thickness of the recording layers 232 and 252 were 10 nm and 20 nm, respectively. For all media, the optically transparent layers 22 and the intermediate layers 24 were manufactured to have the film thicknesses of 20 µm and 75 µm, respectively.

The media were manufactured as follows: firstly, film formation of the second information layer 25 was conducted sequentially from the reflective layer 245 side on the surface of the substrate 21 on which the grooves had been formed. Next, an ultraviolet curable resin was applied thereto as the intermediate layer 24, and the same grooves as in the substrate 21 were transferred on its surface. Next, the first information layer 23 was formed sequentially from the protective layer 233 to the protective layer 231, and finally a sheet made of polycarbonate was bonded as the optically transparent layer 22 using an ultraviolet curable resin.

The composition of the recording layer 232 was Te₃₆O₅₄Pd₁₀, which was common to all media, and the composition of the recording layer 252 was set so that 10 mol%, 20 mol%, 30 mol% and 40 mol% of SiO₂ were mixed relative to the overall amount with Te-O-Pd whose composition ratio was made constant at Te₄₂O₅₀Pd₈. These media will be referred to as media (21) to (24), respectively. Medium (20) as a comparative example had the same configuration as medium (21) except that the composition of Te₄₂O₅₀Pd₈ that did not contain SiO₂ was used for the recording layer 252. The disks were evaluated as follows. That is, a 2T mark was recorded in the second information layer 25 with a suitable laser power and then its C/N ratio was measured. Table 3 shows the evaluation results of these media, the evaluation being conducted similarly to medium (1).

**(Table 3)**

| Medium No. | Composition of recording layer 252 (mol%) | C/N ratio |
|---|---|---|
| (21) | (Te₄₂O_{5O}Pd₈)₉₀(SiO₂)₁₀ | ○ |
| (22) | (Te₄₂O₅₀Pd₈)₈₀(SiO₂)₂₀ | ○ |
| (23) | (Te₄₂O₅₀Pd₈)₇₀(SiO₂)₃₀ | ○ |
| (24) | (Te₄₂O₅₀Pd₈)₆₀(SiO₂)₄₀ | Δ |
| (20) | Te₄₂O₅₀Pd₈ | × |

With respect to the C/N ratio mentioned in Table 3, "○" denotes at least 45 dB, "Δ" denotes less than 45 dB and 40 dB or more, and "×" denotes less than 40 dB. According to Table 3, the C/N ratio of the 2T mark obtained in media (21) to (24) was improved as compared to that in the medium (20) as the comparative example. Media (21) and (22) could achieve larger signal amplitude. The reason for the effects from these media also can be considered as follows: since SiO₂ was added thereto, thermal conductivity of the recording layer 252 was decreased, thus suppressing thermal diffusion and allowing the formation of a sharp mark. Furthermore, when 2T to 9T random signals were recorded on media (21) to (23) whose C/N ratios were favorite and their jitter values were measured, favorable values of 6.5% or less could be obtained from all of them, which satisfied specification values. From the results of this example, it was confirmed that the content of the material X preferably is 30 mol% or less, more preferably within a range of 10 to 20 mol%.

### [Example 3]

Media as another example were manufactured in the same manner as in medium (1) of Example 1, except that the recording layers 14 contained Sb-O as the low oxide A-O and contained Cr₂O₃ as the material X, including (Sb-O)₉₀(Cr₂O₃)₁₀, (Sb-O)₈₀(Cr₂O₃)₂₀ and (Sb-O)₇₀(Cr₂O₃)₃₀, contained Sb-O as the low oxide A-O and contained SiO₂ and Cr₂O₃ as the material X, including (Sb-O)₉₀(SiO₂)₅(Cr₂O₃)₅, (Sb-O)₈₀(SiO₂)₁₀(Cr₂O₃)₁₀ and (Sb-O)₇₀(SiO₂)₁₅(Cr₂O₃)₁₅, and contained Sb-O as the low oxide A-O and contained Ge-O and SiO₂ as the material X, including (Sb-O)₉₀(Ge-O)₅(SiO₂)₅, (Sb-O)₈₀(Ge-O)₁₀(SiO₂)₁₀ and (Sb-O)₇₀(Ge-O)₁₅(SiO₂)₁₅. These media will be referred to as media (31) to (39), respectively. Medium (30) as a comparative example had the same configuration as medium (31) except that Sb-O was used as the recording layer 14.

As for media (31) to (33) with the recording layers 14 formed of a mixture of Sb-O and Cr₂O₃, the recording layers 14 were formed by supplying a mixture gas of Ar and oxygen so as to attain 0.13 Pa as the overall pressure and conducting sputtering concurrently from a Sb target and a Cr₂O₃ target. By changing the respective sputtering powers, the recording layers 14 with different composition ratios were manufactured. In this step, the flow ratio between the Ar gas and the oxygen gas was adjusted so as to attain a desired composition ratio, regarding Sb-O, of oxygen contained in the film. More specifically, the flow rate of the Ar gas was set at 4.17 × 10⁻⁷ m³/s (25 sccm) and the flow rate of the oxygen gas was set at 3.67 × 10⁻⁷ m³/s (22 sccm). The recording layers 14 of media (34) to (36) formed of a mixture of Sb-O, SiO₂ and Cr₂O₃ were formed similarly by conducting sputtering concurrently from a Sb target and a mixture target of SiO₂ and Cr₂O₃. The recording layers 14 of media (37) to (39) formed of a mixture of Sb-O, Ge-O and SiO₂ were formed similarly by conducting sputtering concurrently from a Sb target and a mixture target of Ge-O and SiO₂.

Table 4 shows evaluation results of these media, the evaluation being conducted in the exactly same manner as in medium (1).

**(Table 4)**

| Medium No. | Composition of recording layer 14 | C/N ratio |
|---|---|---|
| (31) | (Sb-O)₉₀(Cr₂O₃)₁₀ | ○ |
| (32) | (Sb-O)₈₀(Cr₂O₃)₂₀ | ○ |
| (33) | (Sb-O)₇₀(Cr₂O₃)₃₀ | ○ |
| (34) | (Sb-O)₉₀(SiO₂)₅(Cr₂O₃)₅ | ○ |
| (35) | (Sb-O)₈₀(SiO₂)₁₀(Cr₂O₃)₁₀ | ○ |
| (36) | (Sb-O)₇₀(SiO₂)₁₅(Cr₂O₃)₁₅ | ○ |
| (37) | (Sb-O)₉₀(Ge-O)₅(SiO₂)₅ | ○ |
| (38) | (Sb-O)₈₀(Ge-O)₁₀(SiO₂)₁₀ | ○ |
| (39) | (Sb-O)₇₀(Ge-O)₁₅(SiO₂)₁₅ | ○ |
| (30) | Sb-O | × |

With respect to the C/N ratio mentioned in Table 4, "○" denotes at least 40 dB, "Δ" denotes less than 40 dB and 35 dB or more, and "×" denotes less than 35 dB.

According to Table 4, the C/N ratio of the 2T mark obtained in media (31) to (39) was improved as compared to that in the medium (30) as the comparative example. Furthermore, when 2T to 9T random signals were recorded on these media (31) to (39) and their jitter values were measured, favorable values of 6.5% or less could be obtained from all of them, which satisfied specification values.

Furthermore, also in the case of Sn-O, In-O, Zn-O, Mo-O and W-O being used instead of Sb-O, the results similar to Table 4 could be obtained. It was confirmed that the use of these base materials could achieve the C/N ratio enhancement effects of the present invention as well.

### [Example 4]

As still another example, the optical information recording medium 3 provided with four information layers as shown in Fig. 4 was manufactured.

Firstly, a procedure for manufacturing the optical information recording medium of this example will be described below. On the surface of the substrate 21 on which the grooves had been formed, the fourth information layer 400 was formed sequentially from the reflective layer 404 side to the protective layer 401. Next, an ultraviolet curable resin was applied thereto as the intermediate layer 24, and the grooves similar to those in the substrate 21 were formed on its surface by transferring. Next, on the surface of the intermediate layer 24 on which the grooves had been formed, the third information layer 300 was formed sequentially from the reflective layer 304 side to the protective layer 301. Next, an ultraviolet curable resin was applied thereto as the intermediate layer 24, and the grooves similar to those in the substrate 21 were formed on its surface by transferring. Next, on the surface of the intermediate layer 24 on which the grooves had been formed, the second information layer 200 was formed sequentially from the protective layer 203 side to the protective layer 201. Next, an ultraviolet curable resin was applied thereto as the intermediate layer 24, and the grooves similar to those in the substrate 21 were formed on its surface by transferring. Next, on the surface of the intermediate layer 24 on which the grooves had been formed, the first information layer 100 was formed sequentially from the protective layer 103 side to the protective layer 101. Next, a protective coat made of an ultraviolet curable resin was provided thereon, and finally a sheet made of polycarbonate was bonded as the optically transparent layer 22 using an ultraviolet curable resin.

The following describes a method of manufacturing the fourth information layer 400 to the first information layer 100 more specifically.

As the substrate 21, a disc-like polycarbonate plate was used. The disc-like polycarbonate plate had a thickness of 1.1 mm and a diameter of 120 mm. It had tracks of convexities and concavities formed on a surface on which the reflective layer 404 would be formed. The tracks had a depth of 20 nm and a track pitch (a distance between groove portions) of 0.32 µm. As the reflective layer 404, an Al₉₈Cr₂ (atomic%) film with a thickness of 80 nm was formed by DC sputtering in an Ar gas atmosphere. Subsequently, as the protective layer 403, a (ZnS)₈₀(SiO₂)₂₀ (mol%) film was formed to have a thickness of 11 nm by RF sputtering in an Ar gas atmosphere. Subsequently, as the recording layer 402, a (Te₄₂O₅₀Pd₈)₉₀(SiO₂)₁₀ (mol%) film was formed so as to have a thickness of 20 nm by DC sputtering. In this step, sputtering was conducted with respect to a mixture target of Te-Pd and SiO₂ in an atmosphere of a mixture gas of Ar gas and oxygen gas whose overall pressure was kept at 0.13 Pa. By adjusting the composition of the target and a flow ratio between the Ar gas and the oxygen gas, the recording layer 402 having a desired composition could be obtained (the recording layers 302, 202 and 102 described later also were obtained by the same method). Subsequently, as the protective layer 401, a film made of (ZnS)₈₀(SiO₂)₂₀ (mol%) was formed so as to have a thickness of 17 nm by RF sputtering in an Ar gas atmosphere. With the above-stated method, the fourth information layer 400 could be manufactured. Herein, the recording layer 402 contained Pd as the element M and SiO₂ as the material X, and satisfied the relationships of 0.05y ≤ x ≤ y with the content of the material X being 30 mol% or less.

Subsequently, the intermediate layer 24 was formed to have a thickness of 17 µm. On the surface of the intermediate layer 24 on which the grooves had been formed, an Ag-Pd-Cu film was formed as the reflective layer 304 to have a thickness of 10 nm by DC sputtering in an Ar gas atmosphere. Subsequently, as the protective layer 303, a (ZnS)₂₀(SiO₂)₈₀ (mol%) film was formed to have a thickness of 22 nm by RF sputtering in an Ar gas atmosphere. Subsequently, as the recording layer 302, a (Te₄₀O₅₂Pd₈)₉₀(SiO₂)₁₀ (mol%) film was formed by DC sputtering so as to have a thickness of 8 nm. Subsequently, as the protective layer 301, a film made of (ZnS)₈₀(SiO₂)₂₀ (mol%) was formed so as to have a thickness of 30 nm by RF sputtering in an Ar gas atmosphere. With the above-stated method, the third information layer 300 could be manufactured. Herein, the recording layer 302 contained Pd as the element M and SiO₂ as the material X, and satisfied the relationships of 0.05y ≤ x ≤ y with the content of the material X being 30 mol% or less.

Subsequently, the intermediate layer 24 was formed to have a thickness of 15 µm. On the surface of the intermediate layer 24 on which the grooves had been formed, a (ZrSiO₄)₃₀(Cr₂O₃)₄₀(LaF₃)₃₀ (mol%) was formed as the protective layer 203 to have a thickness of 6 nm by RF sputtering in an Ar gas atmosphere. Subsequently, as the recording layer 202, a (Te₃₆O₅₄Pd₁₀)₉₀(SiO₂)₁₀ (mol%) film was formed by DC sputtering so as to have a thickness of 10 nm. Subsequently, as the protective layer 201, a film made of (SnO₂)₈₀(Ga₂O₃)₂₀ (mol%) was formed so as to have a thickness of 32 nm by RF sputtering in an Ar gas atmosphere. With the above-stated method, the second information layer 200 could be manufactured. Herein, the recording layer 202 contained Pd as the element M and SiO₂ as the material X, and satisfied the relationships of 0.05y ≤ x ≤ y with the content of the material X being 30 mol% or less.

Subsequently, the intermediate layer 24 was formed to have a thickness of 18 µm. On the surface of the intermediate layer 24 on which the grooves had been formed, a (ZnS)₈₀(SiO₂)₂₀ (mol%) was formed as the protective layer 103 to have a thickness of 11 nm by RF sputtering in an Ar gas atmosphere. Subsequently, as the recording layer 102, a (Te₃₄O₅₆Pd₁₀)₉₀(SiO₂)₁₀ (mol%) film was formed by DC sputtering so as to have a thickness of 8 nm. Subsequently, as the protective layer 101, a film made of (ZnS)₈₀(SiO₂)₂₀ (mol%) was formed so as to have a thickness of 39 nm by RF sputtering in an Ar gas atmosphere. With the above-stated method, the first information layer 100 could be manufactured. Herein, the recording layer 102 contained Pd as the element M and SiO₂ as the material X, and satisfied the relationships of 0.05y ≤ x ≤ y with the content of the material X being 30 mol% or less.

Subsequently, the protective coat and the optically transparent layer 22 were formed to have an overall thickness of 60 µm, whereby the optical information recording medium (medium (41)) of this example was manufactured.

The intermediate layers 24 provided between the respective information layers had different thicknesses from one another as stated above, because there was apprehension that equal thicknesses might cause an interference of stray light between the respective information layers.

Measurements of the optical constants of the respective recording layers were carried out by a spectrometer using samples manufactured on quartz substrates under the exactly same film formation conditions for forming the films of the recording layers. The measurements of the optical constants in the crystallized state were carried out by the same method after the samples were annealed to a predetermined temperature at which their recording layers were brought into the crystallized state. The obtained values were approximately the same for all of the recording layers 402, 302, 202 and 102 where *na =* 2.3, *ka* = 0.2, *nc =* 2.3, and *kc =* 1.0. In this context, "*na*" and "*ka*" denote a refractive index and an extinction coefficient obtained when the recording layers were in the as-depo state (i.e. the state immediately after their formation), while "*nc*" and "*kc*" denote a refractive index and an extinction coefficient obtained when the recording layers were in the crystallized state.

The thickness *d*(nm) of the respective protective layers of the present example is expressed by a formula of *d* = *aλ*/*n* (where *n* denotes the refractive index of the protective layer, *a* indicates a positive number, and λ denotes the wavelength of light (i.e. 405 nm in this case)). The thickness of the protective layers was designed as follows. That is, the thickness was adjusted to allow all the signals obtained from the respective information layers and levels of their reflectances to be substantially equal to one another, and then the value of "*a*" was optimized so that within the range that allowed the above-mentioned adjustment to be carried out, the transmittance of the information layers was as high as possible and the difference in transmittance obtained between the recorded state and the unrecorded state was small. Furthermore, media (42) and (43) that were different from this example only in materials of recording layers 402, 302, 202 and 102 were manufactured in a similar manner. The materials of the respective recording layers are as shown in Table 5.

Using suitable laser power, 2T marks were recorded in the first information layer 100, the second information layer 200, the third information layer 300, and the fourth information layer 400 of the medium (41) produced by the above-mentioned method, and then their C/N ratios were measured. Laser light with a wavelength of 405 nm and an objective lens with a numerical aperture of 0.85 were used for recording and reproducing the signals. The signals were recorded with recording densities that allow the information layers to have capacities of approximately 23 GB and 25 GB (hereinafter the recording densities are referred to as 23 GB recording density and 25 GB recording density, respectively). In the case of the 23 GB recording density, the measurement was carried out under the conditions that the 2T mark length was 0.160 µm and the disk rotational speed was a linear velocity of 5.28 m/s as in Example 1. On the other hand, in the case of the 25 GB recording density, the measurement was carried out under the conditions that the 2T mark length was 0.149 µm and the disk rotational speed was a linear velocity of 4.92 m/s.

Table 5 shows materials of the respective protective layers of the medium samples (41) to (43), relationships between x and y, judgment results on C/N ratios, optical properties of single information layer and optical properties in a lamination state. Furthermore, Table 5 shows evaluation results on medium (40) in which the recording layers were manufactured using a material that did not contain the material X.

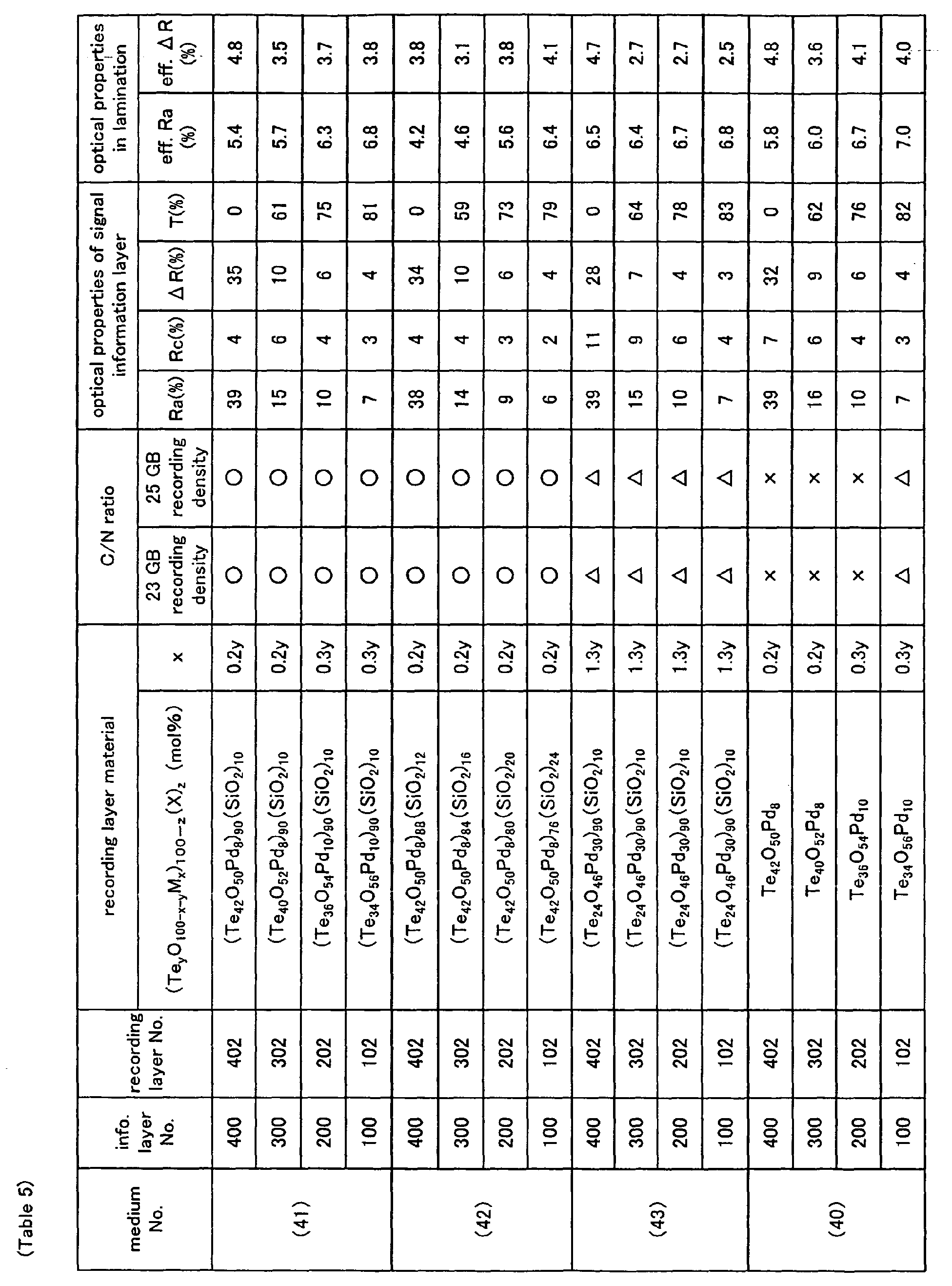

As for the judgment on obtained C/N ratios, in the case of the 23 GB recording density, "○" denotes at least 45 dB, "Δ" denotes less than 45 dB and 40 dB or more, and "×" denotes less than 40 dB. On the other hand, in the case of the 25 GB recording density, "○" denotes at least 42 dB, "Δ" denotes less than 42 dB and 37 dB or more, and "×" denotes less than 37 dB.

As is evident from Table 5, media (41) and (42) could achieve favorable C/N ratios in all information layers at the 23 GB recording density and the 25 GB recording density. When 2T to 9T random signals were recorded on the first information layer 100, the second information layer 200, the third information layer 300 and the fourth information layer 400 of these media (41) and (42) at a density corresponding to the capacity of 25 GB and their jitter values were measured, favorable values could be obtained from the first to the third information layers and from the fourth information layer, which were about 10% and about 8%, respectively. As for medium (43) having a relationship of y<x, although being slightly inferior to media (41) and (42), a favorable C/N ratio could be attained.

Medium (40) as the comparative example achieved a slightly favorable C/N ratio only in the first information layer 100. However, this medium did not contain the material X, meaning increased thermal diffusion in the recording film surface, and therefore a recording power at the approximately upper limit had to be applied to the first information layer 100 in order to have C/N ratios of 42 dB (23 GB recording density) and 39 dB (25 GB recording density). The C/N ratio of the second information layer 200 did not achieve 40 dB even in the 23 GB recording density. The third information layer 300 and the fourth information layer 400 also could not achieve the C/N ratio of 35 dB.

In Table 5, *Ra* and *Rc* denote reflectances of each individual information layer that are obtained when the recording layer is in the as-depo state and in the crystallized state. *ΔR* denotes the value of *Ra - Rc. T* denotes the average of transmittances of each individual information layer that are obtained when the recording layer is in the as-depo state and in the crystallized state. The measurements of *Ra* and *Rc* were carried out with an evaluation drive using samples, each of which included each individual information layer formed on a substrate. Similarly, the measurements of transmittances were carried out with a spectrometer using samples each of which included the each individual information layer formed on a substrate. The recording layers were brought into the crystallized state through the laser beam irradiation carried out under suitable conditions using an initializing device.

Furthermore, in Table 5, "*eff. Ra*" and "*eff. ΔR*" denote the reflectance obtained in the as-depo state and the difference between the reflectance obtained in the as-depo state and that obtained in the crystallized state, respectively. The "*eff. Ra*" and "*eff. ΔR*" were measured with the evaluation drive while a predetermined information layer was irradiated with a laser beam, with the four information layers being stacked together. As shown in Table 5, approximately the same levels of reflectances and differences in reflectance were obtained in the four information layers of the media (41) and (42), with the four information layers being stacked together. Furthermore, it was found that medium (43) had slightly small "*eff. ΔR*". Although medium (40) as the comparative example had favorable values of "*eff. Ra*" and "*eff. ΔR*", its C/N ratio was inferior to those of media (41) to (43). From this, the addition of the material X so as to decrease thermal conductivity contributed considerably to favorable C/N ratios.

From these results, it was confirmed that the use of the recording layer containing a mixture of a low oxide Te-O-M and the material X allowed four information layers to be stacked, each having 25 GB recording density, so as to realize an optical information recording medium of the capacity of 100 GB as the whole.

As stated above, according to the optical information recording medium and the method for manufacturing the same of the present invention, thermal diffusion in the recording film surface can be suppressed, and therefore favorable signal qualities can be obtained even under still higher density recording conditions. Thereby, a recording medium with a still larger capacity can be provided.

## Claims

1. An optical information recording medium comprising a recording layer, wherein information is recorded and reproduced with respect to the optical information recording medium by irradiating the recording layer with a laser beam,
wherein the recording layer comprises a mixture of a low oxide Te-O-M and a material X, wherein M denotes at least one element selected from the group consisting of a metallic element, a metalloid element, and a semiconductor element, and X denotes at least one compound selected from the group consisting of a fluoride, a carbide, a nitride and an oxide (except for Te oxide), wherein the low oxide refers to an oxide whose composition ratio of oxygen element is smaller than a composition ratio of oxygen element according to a stoichiometric composition.

2. The optical information recording medium according to claim 1, wherein, assuming that an atomic density of M in the Te-O-M is represented as x (atomic%) and an atomic density of Te is represented as y (atomic%), x and y satisfy a relationship of 0.05y ≤ x ≤ y.

3. The optical information recording medium according to claim 1, wherein M is at least one element selected from the group consisting of Pd, Au, Pt, Ag, Cu, Sb, Bi, Ge, and Sn.

4. The optical information recording medium according to claim 1, wherein the recording layer comprises a first film comprising at least Te-O-M and a second film comprising at least the material X.

5. An optical information recording medium comprising a recording layer, wherein information is recorded and reproduced with respect to the optical information recording medium by irradiating the recording layer with a laser beam,
wherein the recording layer comprises a mixture of a low oxide A-O and a material X, wherein A denotes at least one element selected from the group consisting of Sb, Sn, In, Zn, Mo and W and X denotes at least one compound selected from the group consisting of a fluoride, a carbide, a nitride and an oxide, wherein the low oxide refers to an oxide whose composition ratio of oxygen element is smaller than a composition ratio of oxygen element according to a stoichiometric composition.

6. The optical information recording medium according to claim 1 or 5, wherein a content of the material X in the mixture is 30 mol% or less.

7. The optical information recording medium according to claim 1 or 5, wherein the material X comprises at least one selected from the group consisting of La-F, Mg-F, Ca-F, fluorides of rare earth elements, Si-O, Cr-O, Ge-O, Hf-O, Mo-O, Ti-O, W-O, Zn-O and Zr-O.

8. The optical information recording medium according to claim 1 or 5, comprising a plurality of information layers, wherein at least one of the plurality of information layers comprises the recording layer.

9. The optical information recording medium according to claim 1 or 5, wherein a thickness of the recording layer is 20 nm or less.

10. A method for manufacturing an optical information recording medium including a recording layer, wherein information is recorded and reproduced with respect to the optical information recording medium by irradiating the recording layer with a laser beam, comprising the step of:
manufacturing the recording layer by sputtering using a target material comprising Te-M and a material X, wherein M denotes at least one element selected from the group consisting of a metallic element, a metalloid element, and a semiconductor element, and X denotes at least one compound selected from the group consisting of a fluoride, a carbide, a nitride and an oxide (except for Te oxide).

11. The method for manufacturing an optical information recording medium according to claim 10, wherein the target material comprises a mixture of Te-M and the material X.

12. The method for manufacturing an optical information recording medium according to claim 10,
wherein the target material comprises a target material A comprising Te-M and a target material B comprising the material X, and
the recording layer is manufactured by sputtering concurrently using the target material A and the target material B.

13. The method for manufacturing an optical information recording medium according to claim 10,
wherein the target material comprises a target material A comprising Te-M and a target material B comprising the material X,
a low oxide Te-O-M film is manufactured by sputtering using the target material A, and
a film comprising the material X is manufactured by sputtering using the target material B.

14. A method for manufacturing an optical information recording medium including a recording layer, wherein information is recorded and reproduced with respect to the optical information recording medium by irradiating the recording layer with a laser beam, comprising the step of:
manufacturing the recording layer by sputtering using a target material comprising an element A and a material X, wherein A denotes at least one element selected from the group consisting of Sb, Sn, In, Zn, Mo and W and X denotes at least one compound selected from the group consisting of a fluoride, a carbide, a nitride and an oxide.

15. The method for manufacturing an optical information recording medium according to claim 14, the target material comprises a mixture of A and the material X.

16. The method for manufacturing an optical information recording medium according to claim 14,
wherein the target material comprises a target material C comprising A and a target material B comprising the material X, and
the recording layer is manufactured by sputtering concurrently using the target material C and the target material B.

17. The method for manufacturing an optical information recording medium according to claim 10 or 14,
wherein, in the step of manufacturing the recording layer, a film formation gas comprises a mixture gas of a rare gas and an oxygen gas, and
the recording layer is manufactured by reactive sputtering.
